# EUROPEAN PATENT APPLICATION

(11) **EP 4 571 512 A1**
(43) Date of publication of application: **18.06.2025**
(21) Application number: 24207788.1
(22) Date of filing: 21.10.2024
(51) Int. Cl.: G06F 9/50, G06F 9/48

(54) **PREDICTIVE WORKLOAD ORCHESTRATION FOR DISTRIBUTED COMPUTING ENVIRONMENTS**

(30) Priority: 13.12.2023 US 202318538364
(71) Applicant: Intel Corporation, Santa Clara, CA 95054 (US)
(72) Inventor: NADATHUR, Sundar, Cupertino, 95014 (US); THYAGATURU, Akhilesh, Tampa, 33573 (US); KYLE, Jonathan L., Atlanta, 30316 (US); BAKER, Scott M., Eugene, 97405 (US); KIM, Woojoong, San Jose, 95134 (US)
(74) Representative: Maiwald GmbH

(57) **Abstract**

Embodiments for orchestrating execution of workloads on a distributed computing infrastructure are disclosed herein. In one example, environment data is received for compute devices in a distributed computing infrastructure. The environment data is indicative of an operating environment of the respective compute devices and a physical environment of the respective locations of the compute devices. Future operating conditions of the compute devices are predicted based on the environment data, and workloads are orchestrated for execution on the distributed computing infrastructure based on the predicted future operating conditions.

## Description

### BACKGROUND

Edge computing infrastructure and other distributed computing environments are often deployed in locations with harsh environments, such as outdoors, industrial settings, remote areas, and so forth. These environments often have challenging environmental conditions that can impact the performance of computing devices deployed in these locations, such as extreme temperatures, humidity, rain, snow, lightning, wind, cloudiness, pressure, and extreme variations thereof.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures.
**FIG. 1** illustrates an example of a distributed computing system that leverages predictive workload management.
**FIG. 2** illustrates an example of workload hopping in a distributed computing system.
**FIG. 3** illustrates an example of predictive workload orchestration for an end-to-end service in a distributed computing system.
**FIG. 4** illustrates a flowchart for performing predictive workload orchestration in a distributed computing environment.
**FIG. 5** illustrates an example of an edge cloud environment.
**FIG. 6** illustrates an example of operational layers in an edge cloud environment.
**FIG. 7** illustrates an example of a virtualized edge environment.
**FIGS. 8A-B**illustrate examples of computing devices and systems.

### EMBODIMENTS OF THE DISCLOSURE

Edge computing environments are often very different from cloud computing environments and data centers, as edge compute devices are typically decentralized and distributed across various locations, which may be subject to fluctuating environmental conditions, harsh environments, and extreme weather (e.g., heat, cold, humidity, rain, snow, lightning, wind, cloudiness, high or low pressure, etc.). In many cases, for example, edge devices may be outdoors or inside enclosures/housing such as cabinetry, with no or minimal (e.g., unsophisticated) cooling capabilities, and may be exposed to harsh environmental conditions such as high ambient and hardware temperatures, vibrations from wind, etc. All of these factors contribute to an unequal hardware resource dependency for software in edge environments compared to the cloud.

In some cases, for example, executing a high volume of hardware-centric operations on an edge device may run the hardware hot over a period of execution. Once the hardware becomes too hot, thermal mitigation techniques may be triggered at the platform level, which may cause some of the processing to be offloaded to underutilized resources to lower the operating temperature of the edge device. This reactive approach is often too slow to fully mitigate the performance consequences, however, as high operating temperatures may decrease the longevity of hardware components on the edge device, and any service disruptions (e.g., from last-minute workload migrations, performance throttling, hardware failures) may impede the ability to maintain strict service level agreements (SLAs) and thus lead to SLA violations. Thus, this ineffective management of hardware resources fails to consider the impact of environmental changes (e.g., ambient and hardware component temperatures) until the platform exhibits symptoms, which is too late.

There are various unique aspects of edge environments that contribute to this problem. For example, edge devices, such as routers, switches, servers, and Internet-of-Things (IoT) sensors, generate heat during operation. Since these devices are often compact and located in non-traditional settings, they can generate heat in close proximity to each other, leading to localized hotspots. In addition, edge devices are frequently deployed in harsh environments, such as outdoor locations, industrial settings, and remote areas. These environments can have extreme temperature variations, dust, humidity, and other factors that can impact thermal management and performance. For example, elevated temperatures can reduce the lifespan of electronic components and lead to hardware failures. Thus, ensuring reliability in thermally challenging environments is essential to minimize downtime and maintenance costs.

Unlike data centers with sophisticated cooling infrastructure, however, edge environments often lack advanced cooling systems. For example, edge deployments are often in constrained spaces, such as small enclosures or cabinets, which limits the ability to install large cooling equipment or use traditional airflow management techniques. In many cases, the cooling options (if any) in edge environments may be limited to passive cooling, fans, or basic air conditioning, which may be insufficient to handle heat dissipation effectively. Moreover, in edge computing, power efficiency is crucial due to the often remote and energy-constrained nature of deployment locations. Thus, cooling solutions must balance effective heat dissipation with energy efficiency to avoid excessive power consumption. Managing and monitoring the thermal conditions of edge devices in remote locations can also be challenging. For example, ensuring that cooling systems are functioning correctly and devices are within safe temperature ranges may require advanced remote monitoring/management tools. Many edge deployments have budget constraints, however, which can limit the investment in sophisticated cooling solutions and remote management tools. Thus, balancing cost-effectiveness with thermal management is a key challenge.

Accordingly, this disclosure presents embodiments of predictive workload orchestration for edge infrastructure and other distributed computing environments. The described solution addresses the unique challenges of edge environments by managing workloads in the edge ecosystem more effectively based on environmental considerations, as described further throughout this disclosure.

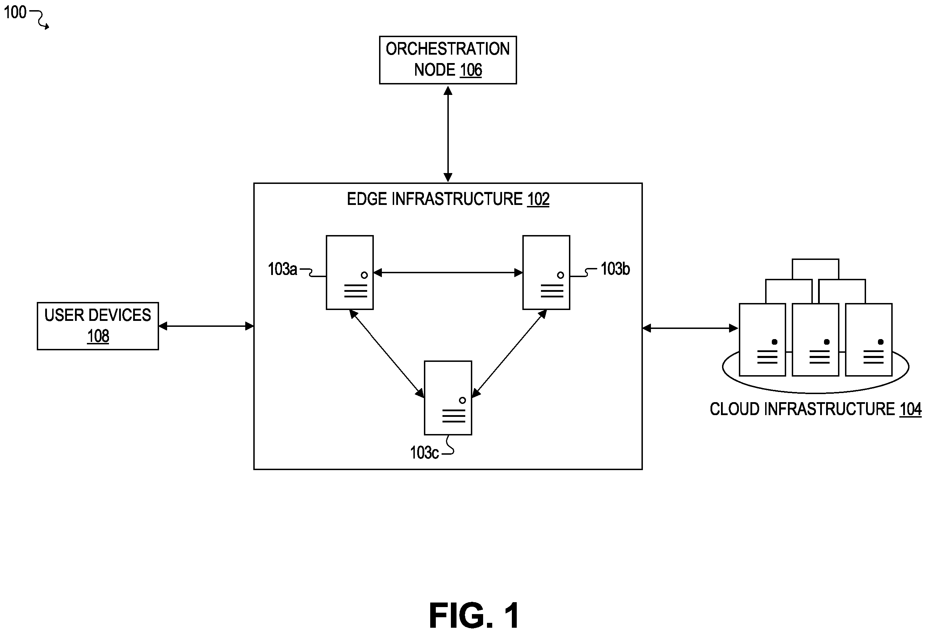

**FIG. 1** illustrates an example of a distributed computing system 100 that leverages predictive workload management. In the illustrated embodiment, the distributed computing system 100 includes an edge infrastructure 102 with multiple compute devices/nodes 103a-c, a cloud infrastructure 104 (e.g., cloud data center with compute devices/nodes), an orchestration node 106, and user devices 108. The edge compute devices 103a-c may be distributed across various locations with different environments, including outdoors, inside enclosures/housing (e.g., cabinets), industrial settings, remote areas, underwater, high altitudes, etc. As a result, the edge devices 103a-c may face harsh environmental conditions, such as extreme temperatures, humidity, wind, rain, snow, lightning, cloudiness, pressure, and extreme variations of the foregoing. Accordingly, in the illustrated embodiment, workloads are continuously orchestrated across the edge infrastructure 102 to proactively adapt and readapt the infrastructure 102 (e.g., workload placement/migration, hardware reconfiguration, thermal adaptation) based on predictions about the changing environments of edge devices 103a-c in the infrastructure 102, as described further below and throughout this disclosure.

In some embodiments, for example, changes in the environments of edge devices 103a-c may be predicted using artificial intelligence (AI) and/or machine learning (ML) techniques (e.g., by training predictive models as described further throughout this disclosure). Workload placement decisions can then be determined based on the predicted environmental changes for the edge devices 103a-c, along with other considerations such as compute resource availability, workload requirements, and SLA requirements (e.g., end-to-end latency, throughput). In this manner, workloads can be proactively placed on, and migrated to, the appropriate edge devices 103a-c based on environmental considerations to improve performance (e.g., thermal management) and avoid service disruptions. For example, by predicting environmental changes at the edge, workloads can be preemptively migrated or "hopped" between edge devices 103a-c to avoid any performance penalties from edge devices 103a-c that may face challenging environmental and operational conditions, such as high operating and/or ambient temperatures, vibrations due to environmental shock (e.g., from high-speed wind, hurricanes, earthquakes), etc. This predictive approach to workload orchestration helps achieve environmental equilibrium among the distributed edge devices 103 (e.g., balanced/stable thermal profiles for thermal equilibrium) while also maintaining service level objectives (SLOs) (e.g., end-to-end latency) for SLAs associated with the workloads, which can be challenging with purely reactive approaches.

In this manner, continuous workload orchestration can be leveraged in edge computing environments using AI-based prediction for continuous workload placement and hopping across distributed edge devices 103 to manage edge deployments and workloads more effectively (e.g., effective thermal management), achieve operational equilibrium among edge devices 103 (e.g., balanced operating conditions including thermal profiles and other environmental factors), and ensure that edge devices 103 operate properly under varying conditions.

The described solution can also be leveraged for proactive maintenance and capacity planning. For example, workload orchestration can be balanced across the respective compute devices 103 based on the predicted longevity of their respective hardware components, thus increasing hardware longevity and enabling hardware components to be replaced near the end of their life but before any failures.

The described solution provides various advantages, including, without limitation, improved reliability, performance, energy efficiency, and cost savings, extended hardware lifespans, and more efficient management of edge deployments (including thermal challenges), which enables SLAs to be maintained and contributes to a positive user experience.

The compute devices 103a-c may include a variety of heterogenous hardware components/resources for executing workloads and/or workload tasks, such as central processing units (CPUs), graphics processing units (GPUs), vision processing units (VPUs), edge processing units (EPUs), field-programmable gate arrays (FPGAs), and other application-specific integrated circuits (ASICs). In some cases, for example, workloads may be placed, migrated, and/or executed on compute devices 103 with an edge processing unit (EPU), which may be a processing unit tailored for running workloads in edge use cases (e.g., resource/power constrained environments), such as a system-on-a-chip with energy-efficient compute hardware (e.g., processor/CPU and/or other types of processing units/accelerators). Further, compute devices 103a-c may include elastic resource adapters and/or compute express link (CXL) interconnects (e.g., PCIe) to facilitate workload orchestration and execution on heterogenous hardware components with hot-swappable workloads that can be easily migrated between the respective compute devices 103a-c and associated hardware components.

Further, various types of virtualization may be leveraged for orchestrating and executing workloads across the heterogeneous compute devices 103a-c and their associated hardware components, such as virtual machines, containers, scalable input/output (I/O) virtualization (IOV) (e.g., hardware-assisted I/O virtualization), network slicing (e.g., 5G network slicing), and so forth. In some embodiments, for example, workloads may be orchestrated for execution across one or more compute nodes, which may include physical machines (e.g., compute devices 103a-c) and/or virtual machines hosted on physical machines (e.g., virtual machines on compute devices 103a-c). In addition, scalable IOV may be used to enable virtual machines and containers to share the respective I/O devices (e.g., network controllers, storage controllers, graphics processing units, other hardware accelerators) on the compute devices 103a-c for workload execution and migration. Further, 5G network slicing may be used to orchestrate the placement and migration of workloads on compute devices 103 with network slices that are capable of satisfying the SLAs of the respective workloads (e.g., latency, throughput).

The orchestration node 106 may include one or more computing devices or systems responsible for orchestrating workloads and/or workload tasks across the distributed computing environment 100 (e.g., on the edge 102 and/or cloud 104 infrastructure). In some embodiments, the orchestration node 106 may also serve as a compute device in the edge 102 and/or cloud 104 infrastructure and may be used to execute some of the workloads/tasks orchestrated across the infrastructure.

A workload may refer to any type and/or amount of work to be performed by one or more computing devices or resources. In some embodiments, a workload may include one or more tasks and/or various dependencies among those tasks, where each task includes a discrete function, assignment, or unit of work associated with the workload. In various embodiments, a workload and its tasks may be embodied as a collection of software, including code, software libraries, applications, microservices, operating systems, virtual machines, containers, and so forth. For example, in some embodiments, a workload may include a set of tasks that are respectively implemented by software packaged in one or more container or virtual machines images. Further, the respective tasks may be orchestrated for execution on the same or different compute devices and/or hardware resources.

The user devices 108 may include any type of device for using, managing, and/or interacting with any portion of the distributed computing system 100 (e.g., edge infrastructure 102, cloud infrastructure 104, orchestration node 106), such as personal computers, laptops, tablets, mobile phones, smart vehicles, etc.

Embodiments relating to predictive workload orchestration are shown and described in further detail throughout this disclosure. It should be appreciated that any aspects of the embodiments presented herein may be incorporated into distributed computing system 100.

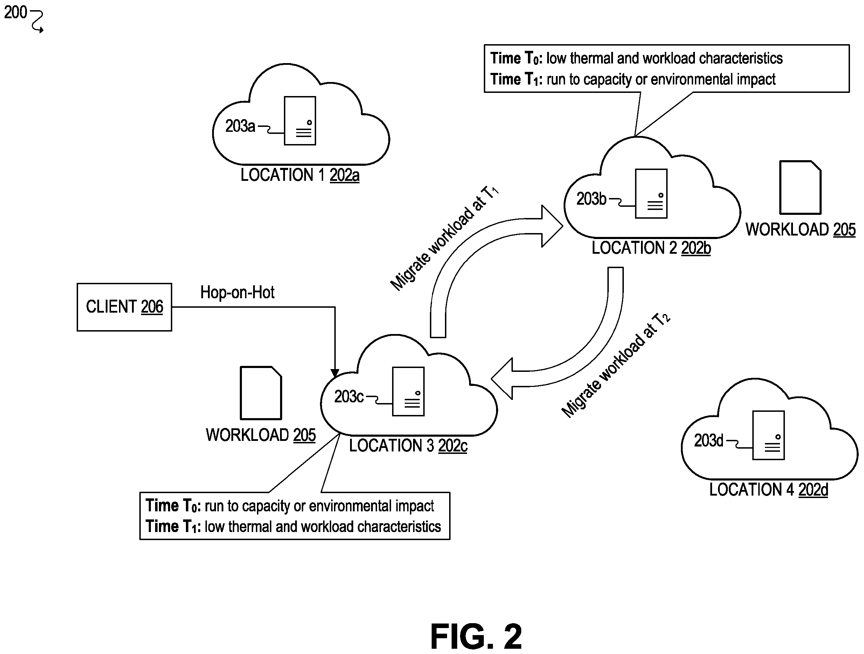

**FIG. 2** illustrates an example of workload hopping in a distributed computing system 200. In the illustrated example, the distributed computing system 200 is an edge computing infrastructure with multiple compute devices 203a-d (referred to as geospatial edge instances or nodes) deployed in different locations 202a-d with varying environments. Further, a workload 205 executing on the edge infrastructure 200 is preemptively migrated or hopped between compute devices 203a-d in different locations 202a-d of the infrastructure 200 to avoid being affected by predicted environmental changes.

In the illustrated embodiment, for example, AI-based thermal/environmental prediction is integrated with workload management and migration capabilities to achieve operational equilibrium among compute devices 203a-d using a "hop on" and "hop off' framework (or "hop off' and "hop back") for workload migration. This workload hopping framework is analogous to a person tossing a hot object between their hands to avoid being burned (e.g., where each hand briefly holds the object and then tosses it to the other hand before being burned). For example, a workload 205 may execute on a first compute device 203c long enough to run but short enough to avoid any impact from predicted environmental changes, at which time the workload 205 may hop to another compute device 202b. In some cases, for example, the first compute device 203c may be at risk of overheating due to high ambient temperatures while the hardware unit is facing the sun and/or receiving direct sunlight, or the first compute device 203c may be vulnerable to disruptions in operation due to vibrations from high-speed wind during a hurricane. Based on these predictions, the workload 205 may hop off the first compute device 203c and onto another compute device 203b with more favorable environmental/operational conditions.

In some embodiments, workload hopping may be performed with relatively low frequency but may continue for relatively long time durations to achieve balanced or stable operating and environmental conditions among the compute devices 203a-d. This predictive workload hopping framework can improve the efficiency of edge computing environments, mitigate thermal challenges, and ensure the reliability and performance of edge nodes while minimizing energy consumption and maintenance costs.

In the illustrated example, a client device 206 configures the edge infrastructure 200 to use a "hop-on-hot" workload migration policy (e.g., where workload hopping is performed when high operating temperatures are predicted).

At time T₀, a workload 205 is initially placed on a compute device 203c in location 3 (202c) of the edge infrastructure 200. During a first time duration (T₀-T₁), compute device 203c runs the workload 205 until a migration event is predicted, such as maxing out the capacity/load of certain hardware resources, or changes in the environment that may impact performance (e.g., overheating due to high ambient and/or hardware operating temperatures). The other compute devices 203a,b,d in the edge infrastructure 200 may have low thermal and workload characteristics during the first time duration.

At time T₁, based on the predicted migration event, the workload 205 hops off compute device 203c and hops on another compute device 203b in location 2 (202b) of the edge infrastructure 200. During a second time duration (T₁-T₂), compute device 203b runs the workload 205 until another migration event is predicted (e.g., maximum capacity, environmental impact). The other compute devices 203a,c,d in the edge infrastructure 200 may have low thermal and workload characteristics during the second time duration.

At time T₂, based on the predicted migration event, the workload 205 hops off compute device 203b and hops back to compute device 203c (or another compute device 202a,d in the infrastructure 200).

The workload hopping continues in this manner to balance the operating and environmental conditions of the respective compute devices 203a-d to achieve operational equilibrium among the compute devices 203a-d.

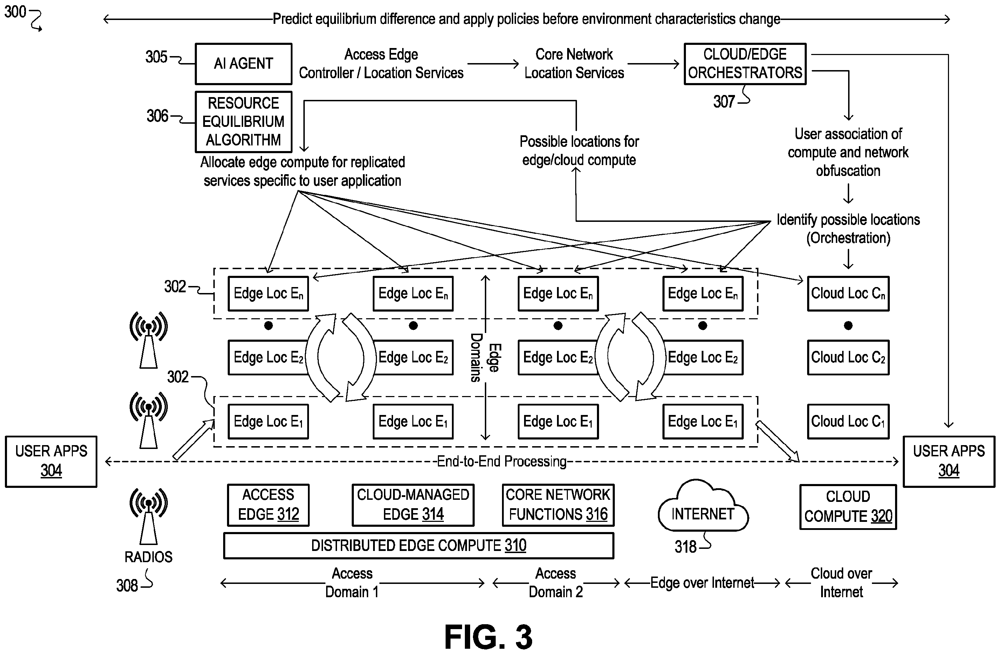

**FIG. 3** illustrates an example of predictive workload orchestration for an end-to-end service in a distributed computing system 300. In the illustrated example, the distributed computing system 300 includes edge and cloud infrastructure distributed across various edge locations E₁-Eₙ and cloud locations C₁-Cₙ. The edge infrastructure may include one or more radios 308 (e.g., base stations, wireless access points) to provide wireless connectivity at the edge (e.g., cellular/Wi-Fi connectivity for user apps/devices 304). Each edge location E₁₋ₙ may include one or more compute nodes for distributed edge computing 310, including the access edge 312, cloud-managed edge 314, and core network functions 316, along with networking/Internet connectivity 318 (e.g., for communication with the cloud). Each cloud location C₁₋ₙ may include one or more compute nodes for cloud computing 320.

In the illustrated example, a workload 302 for an end-to-end service is orchestrated across the edge infrastructure (e.g., on nodes at the respective edge locations E₁-Eₙ) by an edge orchestrator 307. For example, the workload 302 may include one or more tasks or services, which may be chained together to form an end-to-end service for one or more user applications 304 (e.g., autonomous driving software) connected to the edge and/or cloud infrastructure. Moreover, based on the predictive workload orchestration functionality described throughout this disclosure, some or all of the workload 302 may hop or migrate between different edge locations E₁-Eₙ based on environmental/operating conditions predicted by an artificial intelligence (AI) agent 305. As an example, the entire workload 302 may hop from node(s) at edge location E₁ to node(s) at edge location Eₙ due to predicted thermal conditions at location E₁, and then may hop back (e.g., thermal hop from edge location E₁ to Eₙ, and back) when the thermal conditions at edge location E₁ stabilize and/or an operational equilibrium is restored. In some embodiments, a resource equilibrium algorithm 306 may be used to determine when conditions stabilize and/or an equilibrium is achieved. For example, the resource equilibrium algorithm 306 may determine when certain operating conditions (e.g., thermal profiles/temperatures) of nodes at the respective edge locations E₁ to Eₙ, are balanced and/or within a certain range of each other (e.g., based on the standard deviation and/or other statistical measures).

In this manner, workloads 302 are continuously orchestrated across the edge infrastructure based on environmental factors affecting the edge nodes, such that the edge infrastructure is frequently changed to maintain thermal and operational equilibrium. The system aims to reach and maintain a thermal equilibrium when a workload 302 is hopped between safe operating temperature edge nodes. Continuous orchestration may perform the workload allocation and migrations together to estimate both temperature and environmental factor changes. For example, the orchestrator 307 may obtain weather data to estimate green energy or identify potential environmental disturbances, such as a hurricane or tornado with damaging winds. In this case, the continuous orchestration process hops the workload 302 to safe zones until the issue subsides (e.g., based on estimates/predictions and/or actual/observed data). Beyond temperature, any other environmental factors may be considered when making workload allocation and migration decisions, including, without limitation, humidity, precipitation, wind, vibrations, airflow, and power supply stability, among other examples.

In some embodiments, developed automated workload migration routines can move part of the workload 302 tasks or entire workloads 302 from nodes experiencing high temperatures to cooler nodes, so as to precisely cool the hot node by reducing the workload 302, while also moving the part of workload 302 that must be run on a cooler node to meet the SLA. The workload management mechanism may consider predicted thermal conditions when moving workloads 302 to other edge nodes to achieve thermal equilibrium. Extending this, the higher the distribution factor (e.g., greater geographical distribution of workloads 302), the higher the chances of achieving thermal equilibrium due to the use of more resources that are geographically distributed. For continuous orchestration of workloads 302 using a learning agent 305, the scheduler 307 may evaluate the current and/or predicted thermal profiles of all available nodes, and the workloads 302 may be placed across the nodes with the goal of attaining equilibrium among the respective environmental factors.

In an end-to-end operation, the infrastructure continuously adapts to manage thermal and environmental changes, while applications may remain unaware of the infrastructure adaptation to these changes in the infrastructure. The end-to-end sessions are unaffected by the service migration and hopping procedure in the edge environment. Disaggregated function management enables microservices to scale up and down to match and decide how much of the workload should be retained on an executing node and what part of execution should hop out of the system. In a typical edge scenario, the freedom of cooling in the data center/cloud does not exist, and as a result, the orchestration framework cannot homogenously consider the edge resources for application deployment without having a profile of the applications with the respective hardware units. The data center/cloud can provide memory, energy, compute, and thermal footprints of common applications, and the edge orchestrator 307 can use this information to create a thermal profile when an application runs on an edge node. In addition to rebalancing the workload to achieve thermal equilibrium, it may also be important to ensure end-to-end latency and other service level objectives of SLAs remain unaffected.

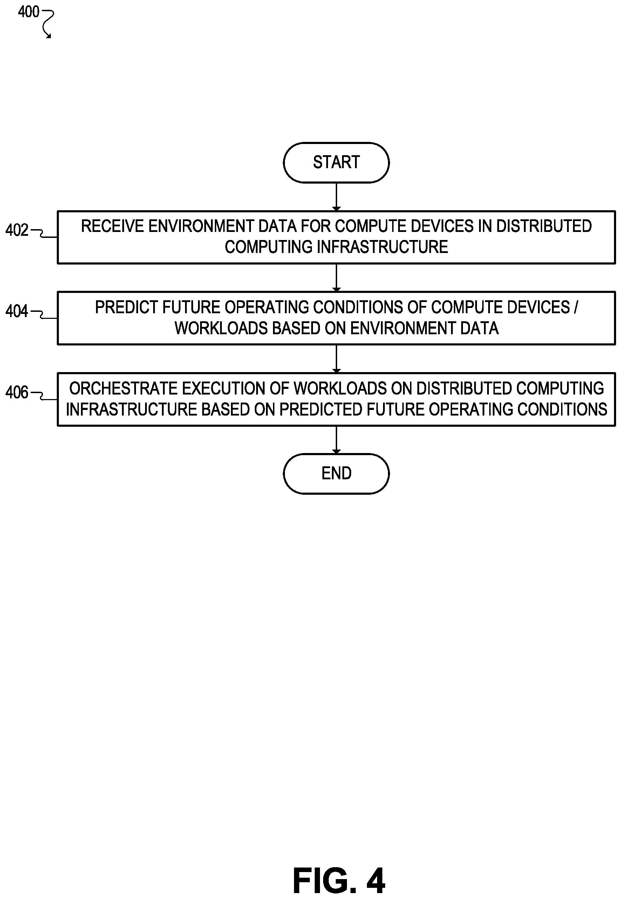

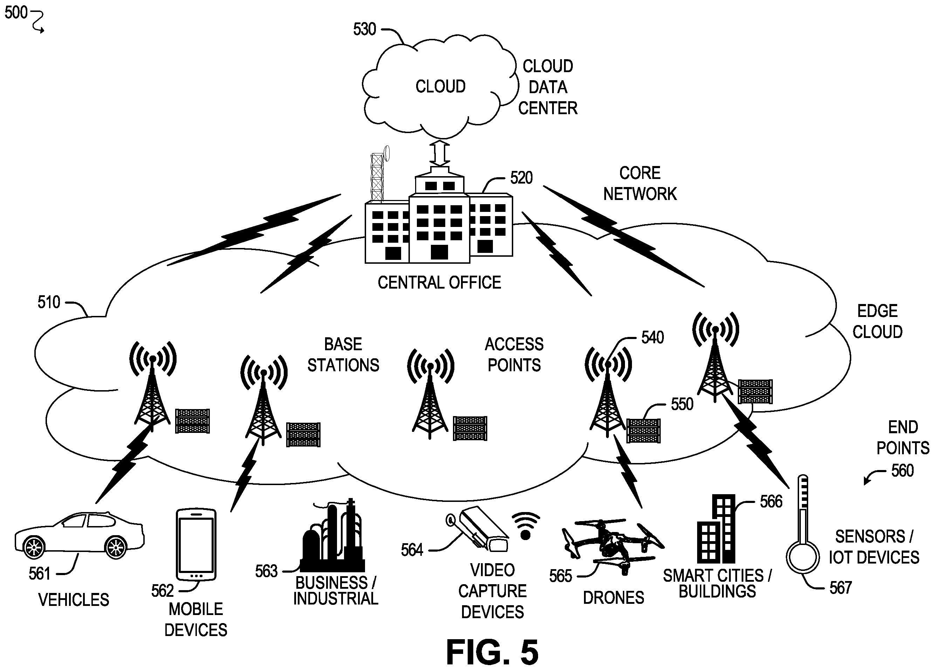

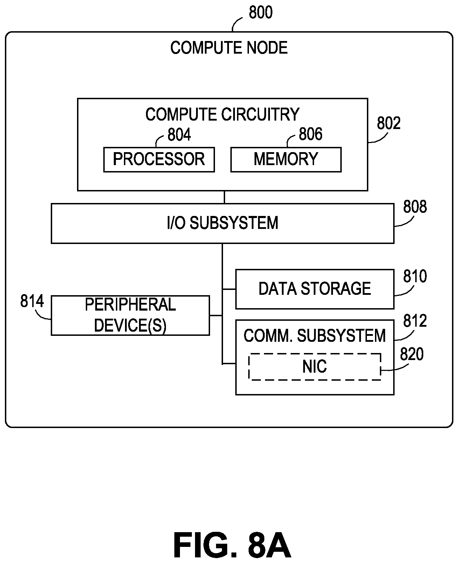

**FIG. 4** illustrates a flowchart 400 for performing predictive workload orchestration in a distributed computing environment in accordance with certain embodiments. In some embodiments, flowchart 400 may be performed using the example computing devices and systems described throughout this disclosure (e.g., systems 100, 200, 300 of FIGS. 1-3, edge/cloud environments of FIGS. 5-7, compute devices 800, 850 of FIGS. 8A-B), such as a device and/or system with interface circuitry/communication circuitry and processing circuitry (e.g., to communicate with or among, and/or orchestrate execution of workloads on, compute devices in the distributed computing infrastructure).

In some embodiments, for example, flowchart 400 may be performed to orchestrate the execution of workloads in a distributed computing infrastructure (e.g., an edge computing infrastructure) based on the environment of the respective compute devices in the infrastructure. For example, the distributed computing infrastructure may include a variety of heterogenous compute devices or nodes in different physical locations, including, without limitation, edge server appliances, cloud server appliances, smart cameras, smart appliances (e.g., doorbell cameras, speakers, virtual assistants, televisions, video streaming devices, wireless access points, home appliances), autonomous vehicles, drones, robots, mobile devices (e.g., mobile phones, tablets, laptops), etc. Each compute device in the infrastructure may include some combination of interface/communication circuitry (e.g., input/output (I/O) interface circuitry, communication circuitry, network interface circuitry), processing circuitry (e.g., processors, cores, central processing units (CPUs), graphics processing units (GPUs), vision processing units (VPUs), FPGA/ASIC accelerators) to execute workloads, sensors (e.g., cameras, temperature sensors, humidity sensors, precipitation sensors, gyroscopes, accelerometers, vibration sensors, battery sensors, pressure sensors), etc. Further, workloads may be orchestrated for execution on the distributed computing infrastructure by one or more orchestration nodes (e.g., a compute device or system that handles workload orchestration on behalf of the distributed infrastructure, which may or may not be one of the compute devices in the distributed infrastructure).

The process flow begins at block 402 by receiving (e.g., via interface circuitry) environment data associated with the respective compute devices in the distributed computing infrastructure. The environment data may be indicative of an operating environment of the respective compute devices (e.g., an internal operating environment of the compute devices) and/or a physical environment of the respective locations of the compute devices (e.g., an external physical/surrounding environment of the compute devices).

In some embodiments, for example, the environment data may indicate one or more operating conditions of the respective compute devices and one or more environment conditions of the respective locations of the compute devices. The operating conditions of the compute devices may include, without limitation, available types of hardware components/resources, resource utilization, hardware temperatures, vibration, airflow, power supply stability, etc. The environment conditions of the locations of the compute devices may include, without limitation, ambient temperature, sunlight exposure, humidity, wind, precipitation, visibility (e.g., cloudy/clear skies, physical obstructions, and/or other conditions that may cause signal interference), etc.

The environment data may be captured by or obtained from a variety of sources, including, without limitation, sensors, compute devices, external services (e.g., weather/mapping services), etc.

The process flow then proceeds to block 404 to predict, based on the environment data, future operating conditions of the compute devices and/or workloads. For example, the predicted future operating conditions of the compute devices may include, without limitation, predicted hardware temperatures (e.g., CPU/GPU/memory temperatures), resource utilization, workload requirements, hardware failures, power supply stability (e.g., battery life, power outages, available power sources / green energy), external environment conditions (e.g., ambient temperature, sunlight exposure, humidity, wind, rain, snow, lightning, cloudiness, pressure), etc.

In some embodiments, the future operating conditions may be predicted using a predictive model trained to predict future operating conditions based on past or present environment/operating conditions (e.g., any of the types of environment data described above with respect to block 402 and elsewhere throughout this disclosure).

In general, a predictive model can be developed and trained (e.g., offline or in advance of rendering any live predictions and/or in real time) to predict a target variable based on a corresponding training dataset. The training dataset may include a set of labeled data samples, where each data sample contains a set of feature values corresponding to a labeled instance of a feature set. In particular, each data sample may include values for a set of features-referred to as the feature set-along with a label representing the ground truth value of a target variable for that data sample.

The target variable may refer to a variable (or set of variables) that the model will be trained to predict for other unlabeled data samples. The feature set may refer to a set of features used for model training and inference, such as a collection of properties, characteristics, or attributes associated with some type of observation (e.g., observations about the physical world, such as the state of compute devices and/or workloads). An "instance" of the feature set may refer to a data sample containing values for the respective features for a particular instance of the observation. In some embodiments, a feature vector may be used to represent the feature values in an individual data sample or instance of the feature set.

A predictive model can be trained using the labeled data samples in the training dataset, and the trained model can then be used to predict the target variable for unlabeled data samples where the value of the target variable is unknown (e.g., new or live data samples that the model has not seen before).

As an example, a predictive model for a workload orchestration use case may be trained to predict future operating/environment conditions of compute devices and/or workloads in a distributed computing infrastructure based on current, recent, and/or past operating/environment conditions.

The target variable may include future operating/environment conditions of compute devices and/or workloads in a distributed computing infrastructure (e.g., any of the examples described above and throughout this disclosure).

The feature set may include various properties, characteristics, or attributes associated with the operational/environmental state of compute devices and/or workloads, including, without limitation, (i) platform characteristics of compute devices such as available types of hardware components/resources (e.g., CPU, GPU, accelerators, memory, disk storage, communication/network interfaces), hardware resource capacities, hardware longevity, available software environments (e.g., operating systems, applications, software libraries), etc.; (ii) workload requirements and characteristics such as required types of hardware components/resources, hardware resource utilization (e.g., number of cycles, memory usage, disk/storage usage, network bandwidth usage, power consumption), software requirements (e.g., required software environments), thermal footprint on different compute devices and hardware components, carbon cost, etc.; and (iii) environment conditions such as any of the internal or external environmental/operating conditions of compute devices and their surrounding physical environments described throughout this disclosure.

Moreover, the feature values in each data sample or instance of the feature set (for training or inference) may be obtained from a variety of sources, including, without limitation, sensors, compute devices, external services (e.g., weather/mapping services), etc.

Once the predictive model is trained, it may be used to predict the target variable (e.g., future operating/environment conditions) for data samples captured in real time (e.g., by performing inference using the predictive model to infer the target variable based on the set of feature values in a data sample). In some embodiments, for example, the set of feature values in each live data sample is supplied as input to the predictive model, and the predictive model then analyzes those feature values and generates an output, which may contain a prediction of-or may otherwise be used to predict-the target variable for the respective data samples (e.g., predicted future operating/environment conditions).

The predictive model may be trained using any suitable type and/or combination of artificial intelligence, machine learning, and/or data analysis techniques, including, without limitation, artificial neural networks (ANN), deep learning, deep neural networks, convolutional neural networks (CNN) (e.g., Inception/ResNet CNN architectures, fuzzy CNNs (F-CNN)), feed-forward artificial neural networks, multilayer perceptron (MLP), pattern recognition, scale-invariant feature transforms (SIFT), principal component analysis (PCA), discrete cosine transforms (DCT), recurrent neural networks (RNN), long short-term memory (LSTM) networks, transformers, clustering (e.g., k-nearest neighbors (kNN), Gaussian mixture models (gMM), k-means clustering, density-based spatial clustering of applications with noise (DBSCAN)), support vector machines (SVM), decision tree learning (e.g., random forests, classification and regression trees (CART)), gradient boosting (e.g., gradient tree boosting, extreme gradient boosted trees), logistic regression, Bayesian networks, Naive-Bayes, moving average models, autoregressive moving average (ARMA) models, autoregressive integrated moving average (ARIMA) models, exponential smoothing models, regression analysis models, and/or ensembles thereof (e.g., models that combine the predictions of multiple machine learning models to improve prediction accuracy), among other examples.

The process flow then proceeds to block 406 to orchestrate (e.g., via the interface circuitry) the execution of workloads on the distributed computing infrastructure based on the predicted future operating conditions of the compute devices and/or workloads. In particular, based on the predicted future operating conditions, the workloads may be orchestrated for execution across some or all of the compute devices in the distributed computing infrastructure (e.g., by sending commands or instructions that cause certain compute devices to execute certain workloads and/or tasks).

For example, the predicted operating conditions may indicate that some compute devices may be underutilized at certain times while others may be overutilized, resource constrained, hot/overheated (e.g., hardware components operating above safe/threshold temperatures), low on battery power, unable to handle certain workload requirements, etc.

The predicted operating conditions may additionally or alternatively indicate that some workloads may have specific requirements at certain times, such as required types of compute resources (e.g., CPU, GPU, FPGA/ASIC accelerators, specific hardware/software environments), volumes/utilizations of certain resources (e.g., processing throughput, memory capacity, storage capacity, network bandwidth/latency), etc.

Thus, in some cases, workloads may be preemptively migrated between compute devices based on the predicted future operating conditions, and optionally other performance objectives or goals, such as improving overall performance (e.g., based on certain key performance indicators (KPIs) or other performance metrics), avoiding service interruptions, preventing hardware failures, satisfying service level objectives (SLOs) of service level agreements (SLAs), etc.

For example, in some cases, workloads may be preemptively migrated off certain compute devices temporarily until operating conditions stabilize for those compute devices (or are predicted to stabilize), at which time the respective workloads may be migrated back to those compute devices (e.g., hop off, hop back). In various embodiments, any suitable criteria may be used to determine whether actual or predicted operating conditions (e.g., resource utilization, operating temperatures, etc.) are stable. For example, actual or predicted operating conditions may be deemed stable when they fall below certain thresholds, when an operational equilibrium is achieved among the compute devices (e.g., operating conditions of the respective compute devices are relatively balanced), etc.

At this point, the process flow may be complete. In some embodiments, however, the process flow may restart and/or certain blocks may be repeated. For example, in some embodiments, the process flow may restart at block 402 to continue orchestrating workloads on the distributed computing infrastructure.

### Example Computing Embodiments

Examples of various computing devices, systems, and environments are presented below, which may be used to implement any or all aspects of the workload orchestration solution described throughout this disclosure. In some embodiments, for example, the distributed computing environments of FIGS. 1-3 may be implemented using the edge and/or cloud computing environments of FIGS. 5-7. Further, the respective computing devices of FIGS. 1-3 may be implemented using any or all of the components of computing devices/systems 800, 850 of FIGS. 8A-B.

### Edge Computing

FIG. 5 is a block diagram 500 showing an overview of a configuration for edge computing, which includes a layer of processing referred to in many of the following examples as an "edge cloud". As shown, the edge cloud 510 is co-located at an edge location, such as an access point or base station 540, a local processing hub 550, or a central office 520, and thus may include multiple entities, devices, and equipment instances. The edge cloud 510 is located much closer to the endpoint (consumer and producer) data sources 560 (e.g., autonomous vehicles 561, user equipment 562, business and industrial equipment 563, video capture devices 564, drones 565, smart cities and building devices 566, sensors and IoT devices 567, etc.) than the cloud data center 530. Compute, memory, and storage resources which are offered at the edges in the edge cloud 510 are critical to providing ultra-low latency response times for services and functions used by the endpoint data sources 560 as well as reduce network backhaul traffic from the edge cloud 510 toward cloud data center 530 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

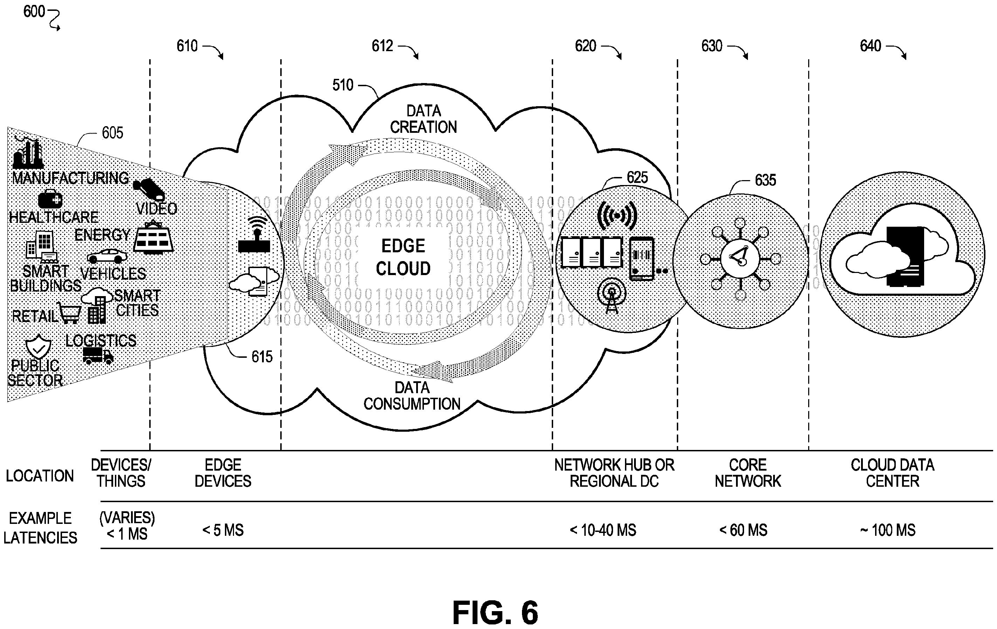

FIG. 6 illustrates operational layers among endpoints, an edge cloud, and cloud computing environments. Specifically, FIG. 6 depicts examples of computational use cases 605, utilizing the edge cloud 510 among multiple illustrative layers of network computing. The layers begin at an endpoint (devices and things) layer 600, which accesses the edge cloud 510 to conduct data creation, analysis, and data consumption activities. The edge cloud 510 may span multiple network layers, such as an edge devices layer 610 having gateways, on-premise servers, or network equipment (nodes 615) located in physically proximate edge systems; a network access layer 620, encompassing base stations, radio processing units, network hubs, regional data centers (DC), or local network equipment (equipment 625); and any equipment, devices, or nodes located therebetween (in layer 612, not illustrated in detail). The network communications within the edge cloud 510 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 600, under 5 ms at the edge devices layer 610, to even between 10 to 40 ms when communicating with nodes at the network access layer 620. Beyond the edge cloud 510 are core network 630 and cloud data center 640 layers, each with increasing latency (e.g., between 50-60 ms at the core network layer 630, to 100 or more ms at the cloud data center layer). As a result, operations at a core network data center 635 or a cloud data center 645, with latencies of at least 50 to 100 ms or more, will not be able to accomplish many time-critical functions of the use cases 605. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 635 or a cloud data center 645, a central office or content data network may be considered as being located within a "near edge" layer ("near" to the cloud, having high latency values when communicating with the devices and endpoints of the use cases 605), whereas an access point, base station, on-premise server, or network gateway may be considered as located within a "far edge" layer ("far" from the cloud, having low latency values when communicating with the devices and endpoints of the use cases 605). It will be understood that other categorizations of a particular network layer as constituting a "close", "local", "near", "middle", or "far" edge may be based on latency, distance, number of network hops, or other measurable characteristics, as measured from a source in any of the network layers 600-640.

The various use cases 605 may access resources under usage pressure from incoming streams, due to multiple services utilizing the edge cloud. To achieve results with low latency, the services executed within the edge cloud 510 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor, etc.).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to Service Level Agreement (SLA), the system as a whole (components in the transaction) may provide the ability to (1) understand the impact of the SLA violation, and (2) augment other components in the system to resume overall transaction SLA, and (3) perform remedial measures.

Thus, with these variations and service features in mind, edge computing within the edge cloud 510 may provide the ability to serve and respond to multiple applications of the use cases 605 (e.g., object tracking, video surveillance, connected cars, etc.) in real-time or near real-time, and meet ultra-low latency requirements for these multiple applications. These advantages enable a whole new class of applications (e.g., Virtual Network Functions (VNFs), Function as a Service (FaaS), edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 510 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 510 (network layers 600-640), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 510.

As such, the edge cloud 510 is formed from network components and functional features operated by and within edge gateway nodes, edge aggregation nodes, or other edge compute nodes among network layers 610-630. The edge cloud 510 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 510 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks, etc.) may also be utilized in place of or in combination with such 3GPP carrier networks.

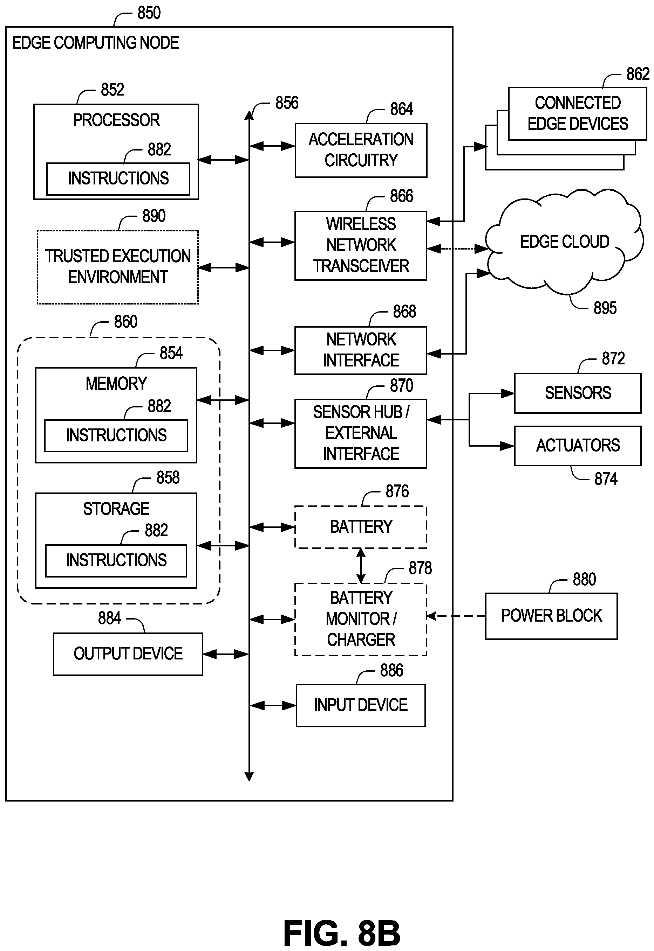

The network components of the edge cloud 510 may be servers, multi-tenant servers, appliance computing devices, and/or any other type of computing devices. For example, the edge cloud 510 may include an appliance computing device that is a self-contained electronic device including a housing, a chassis, a case, or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., electromagnetic interference (EMI), vibration, extreme temperatures, etc.), and/or enable submergibility. Example housings may include power circuitry to provide power for stationary and/or portable implementations, such as alternating current (AC) power inputs, direct current (DC) power inputs, AC/DC converter(s), DC/AC converter(s), DC/DC converter(s), power regulators, transformers, charging circuitry, batteries, wired inputs, and/or wireless power inputs. Example housings and/or surfaces thereof may include or connect to mounting hardware to enable attachment to structures such as buildings, telecommunication structures (e.g., poles, antenna structures, etc.), and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, infrared or other visual thermal sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, rotors such as propellers, etc.) and/or articulating hardware (e.g., robot arms, pivotable appendages, etc.). In some circumstances, the sensors may include any type of input devices such as user interface hardware (e.g., buttons, switches, dials, sliders, microphones, etc.). In some circumstances, example housings include output devices contained in, carried by, embedded therein and/or attached thereto. Output devices may include displays, touchscreens, lights, light-emitting diodes (LEDs), speakers, input/output (I/O) ports (e.g., universal serial bus (USB)), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 8B. The edge cloud 510 may also include one or more servers and/or one or more multi-tenant servers. Such a server may include an operating system and implement a virtual computing environment. A virtual computing environment may include a hypervisor managing (e.g., spawning, deploying, commissioning, destroying, decommissioning, etc.) one or more virtual machines, one or more containers, etc. Such virtual computing environments provide an execution environment in which one or more applications and/or other software, code, or scripts may execute while being isolated from one or more other applications, software, code, or scripts.

### Virtualized Edge Environments

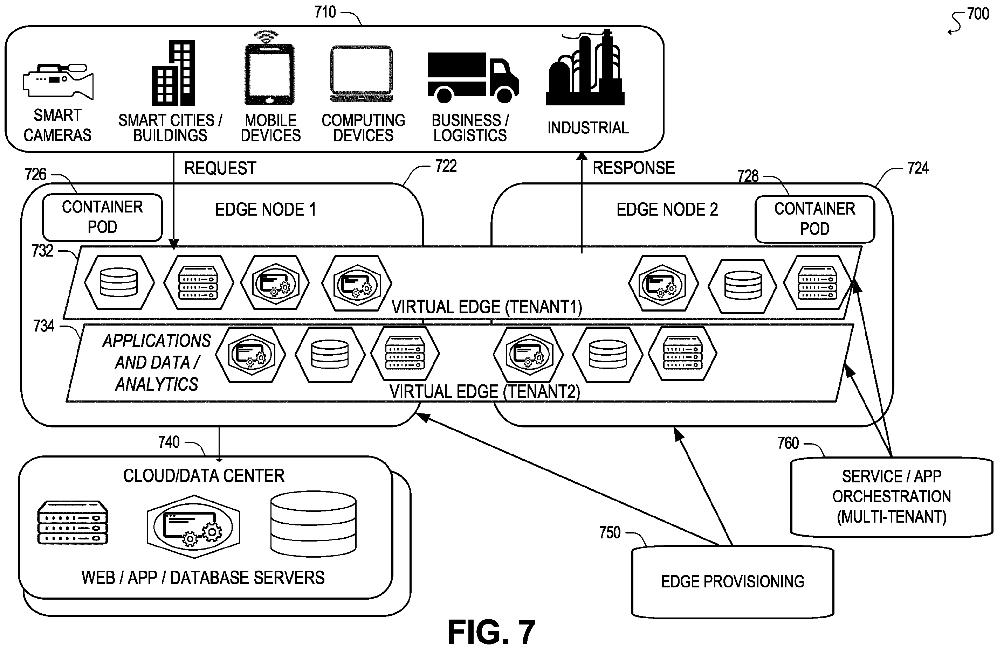

FIG. 7 illustrates deployment and orchestration for virtualized and container-based edge configurations across an edge computing system operated among multiple edge nodes and multiple tenants (e.g., users, providers) which use such edge nodes. Specifically, FIG. 7 depicts coordination of a first edge node 722 and a second edge node 724 in an edge computing system 700, to fulfill requests and responses for various client endpoints 710 (e.g., smart cities/building systems, mobile devices, computing devices, business/logistics systems, industrial systems, etc.), which access various virtual edge instances. Here, the virtual edge instances 732, 734 provide edge compute capabilities and processing in an edge cloud, with access to a cloud/data center 740 for higher-latency requests for websites, applications, database servers, etc. However, the edge cloud enables coordination of processing among multiple edge nodes for multiple tenants or entities.

In the example of FIG. 7, these virtual edge instances include: a first virtual edge 732, offered to a first tenant (Tenant 1), which offers a first combination of edge storage, computing, and services; and a second virtual edge 734, offered to a second tenant (Tenant 2), which offers a second combination of edge storage, computing, and services. The virtual edge instances 732, 734 are distributed among the edge nodes 722, 724, and may include scenarios in which a request and response are fulfilled from the same or different edge nodes. The configuration of the edge nodes 722, 724 to operate in a distributed yet coordinated fashion occurs based on edge provisioning functions 750. The functionality of the edge nodes 722, 724 to provide coordinated operation for applications and services, among multiple tenants, occurs based on orchestration functions 760.

It should be understood that some of the devices in 710 are multi-tenant devices where Tenant 1 may function within a tenant1 `slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 722, 724 may operate as security feature enforcement points for local resources allocated to multiple tenants per node. Additionally, tenant runtime and application execution (e.g., in instances 732, 734) may serve as an enforcement point for a security feature that creates a virtual edge abstraction of resources spanning potentially multiple physical hosting platforms. Finally, the orchestration functions 760 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to edge nodes. Cloud computing nodes often use containers, FaaS engines, servlets, servers, or other computation abstraction that may be partitioned according to a DICE layering and fan-out structure to support a RoT context for each. Accordingly, the respective RoTs spanning devices 710, 722, and 740 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 7. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload, etc.) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 722, 724 may implement the use of containers, such as with the use of a container "pod" 726, 728 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 732, 734 are partitioned according to the needs of each container.

With the use of container pods, a pod controller oversees the partitioning and allocation of containers and resources. The pod controller receives instructions from an orchestrator (e.g., orchestrator 760) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, the pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 760 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

### Computing Devices and Systems

In further examples, any of the compute nodes or devices discussed with reference to the present edge computing systems and environment may be fulfilled based on the components depicted in FIGS. 8A and 8B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 8A, an edge compute node 800 includes a compute engine (also referred to herein as "compute circuitry") 802, an input/output (I/O) subsystem (also referred to herein as "I/O circuitry") 808, data storage (also referred to herein as "data storage circuitry") 810, a communication circuitry subsystem 812, and, optionally, one or more peripheral devices (also referred to herein as "peripheral device circuitry") 814. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 800 may be embodied as any type of engine, device, or collection of devices capable of performing various compute functions. In some examples, the compute node 800 may be embodied as a single device such as an integrated circuit, an embedded system, a field-programmable gate array (FPGA), a system-on-a-chip (SOC), or other integrated system or device. In the illustrative example, the compute node 800 includes or is embodied as a processor (also referred to herein as "processor circuitry") 804 and a memory (also referred to herein as "memory circuitry") 806. The processor 804 may be embodied as any type of processor(s) capable of performing the functions described herein (e.g., executing an application). For example, the processor 804 may be embodied as a multi-core processor(s), a microcontroller, a processing unit, a specialized or special purpose processing unit, or other processor or processing/controlling circuit.

In some examples, the processor 804 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 804 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, storage disks, or AI hardware (e.g., GPUs, programmed FPGAs, or ASICs tailored to implement an AI model such as a neural network). Such an xPU may be designed to receive, retrieve, and/or otherwise obtain programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that an xPU, an SOC, a CPU, and other variations of the processor 804 may work in coordination with each other to execute many types of operations and instructions within and on behalf of the compute node 800.

The memory 806 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device (e.g., memory circuitry) is any number of block addressable memory devices, such as those based on NAND or NOR technologies (for example, Single-Level Cell ("SLC"), Multi-Level Cell ("MLC"), Quad-Level Cell ("QLC"), Tri-Level Cell ("TLC"), or some other NAND). In some examples, the memory device(s) includes a byte-addressable write-in-place three dimensional crosspoint memory device, or other byte addressable write-in-place non-volatile memory (NVM) devices, such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric transistor random access memory (FeTRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, a combination of any of the above, or other suitable memory. A memory device may also include a three-dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may include a transistor-less stackable cross point architecture in which memory cells sit at the intersection of word lines and bit lines and are individually addressable and in which bit storage is based on a change in bulk resistance. In some examples, all or a portion of the memory 806 may be integrated into the processor 804. The memory 806 may store various software and data used during operation such as one or more applications, data operated on by the application(s), libraries, and drivers.

In some examples, resistor-based and/or transistor-less memory architectures include nanometer scale phase-change memory (PCM) devices in which a volume of phase-change material resides between at least two electrodes. Portions of the example phase-change material exhibit varying degrees of crystalline phases and amorphous phases, in which varying degrees of resistance between the at least two electrodes can be measured. In some examples, the phase-change material is a chalcogenide-based glass material. Such resistive memory devices are sometimes referred to as memristive devices that remember the history of the current that previously flowed through them. Stored data is retrieved from example PCM devices by measuring the electrical resistance, in which the crystalline phases exhibit a relatively lower resistance value(s) (e.g., logical "0") when compared to the amorphous phases having a relatively higher resistance value(s) (e.g., logical "1").

Example PCM devices store data for long periods of time (e.g., approximately 10 years at room temperature). Write operations to example PCM devices (e.g., set to logical "0", set to logical "1", set to an intermediary resistance value) are accomplished by applying one or more current pulses to the at least two electrodes, in which the pulses have a particular current magnitude and duration. For instance, a long low current pulse (SET) applied to the at least two electrodes causes the example PCM device to reside in a low-resistance crystalline state, while a comparatively short high current pulse (RESET) applied to the at least two electrodes causes the example PCM device to reside in a high-resistance amorphous state.

In some examples, implementation of PCM devices facilitates non-von Neumann computing architectures that enable in-memory computing capabilities. Generally speaking, traditional computing architectures include a central processing unit (CPU) communicatively connected to one or more memory devices via a bus. As such, a finite amount of energy and time is consumed to transfer data between the CPU and memory, which is a known bottleneck of von Neumann computing architectures. However, PCM devices minimize and, in some cases, eliminate data transfers between the CPU and memory by performing some computing operations in-memory. Stated differently, PCM devices both store information and execute computational tasks. Such non-von Neumann computing architectures may implement vectors having a relatively high dimensionality to facilitate hyperdimensional computing, such as vectors having 10,000 bits. Relatively large bit width vectors enable computing paradigms modeled after the human brain, which also processes information analogous to wide bit vectors.

The compute circuitry 802 is communicatively coupled to other components of the compute node 800 via the I/O subsystem 808, which may be embodied as circuitry and/or components to facilitate input/output operations with the compute circuitry 802 (e.g., with the processor 804 and/or the main memory 806) and other components of the compute circuitry 802. For example, the I/O subsystem 808 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 808 may form a portion of a system-on-a-chip (SoC) and be incorporated, along with one or more of the processor 804, the memory 806, and other components of the compute circuitry 802, into the compute circuitry 802.

The one or more illustrative data storage devices/disks 810 may be embodied as one or more of any type(s) of physical device(s) configured for short-term or long-term storage of data such as, for example, memory devices, memory, circuitry, memory cards, flash memory, hard disk drives (HDDs), solid-state drives (SSDs), and/or other data storage devices/disks. Individual data storage devices/disks 810 may include a system partition that stores data and firmware code for the data storage device/disk 810. Individual data storage devices/disks 810 may also include one or more operating system partitions that store data files and executables for operating systems depending on, for example, the type of compute node 800.

The communication circuitry 812 may be embodied as any communication circuit, device, or collection thereof, capable of enabling communications over a network between the compute circuitry 802 and another compute device (e.g., an edge gateway of an implementing edge computing system). The communication circuitry 812 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 812 includes a network interface controller (NIC) 820, which may also be referred to as a host fabric interface (HFI). The NIC 820 may be embodied as one or more add-in-boards, daughter cards, network interface cards, controller chips, chipsets, or other devices that may be used by the compute node 800 to connect with another compute device (e.g., an edge gateway node). In some examples, the NIC 820 may be embodied as part of a system-on-a-chip (SoC) that includes one or more processors, or included on a multichip package that also contains one or more processors. In some examples, the NIC 820 may include a local processor (not shown) and/or a local memory (not shown) that are both local to the NIC 820. In such examples, the local processor of the NIC 820 may be capable of performing one or more of the functions of the compute circuitry 802 described herein. Additionally, or alternatively, in such examples, the local memory of the NIC 820 may be integrated into one or more components of the client compute node at the board level, socket level, chip level, and/or other levels.

Additionally, in some examples, a respective compute node 800 may include one or more peripheral devices 814. Such peripheral devices 814 may include any type of peripheral device found in a compute device or server such as audio input devices, a display, other input/output devices, interface devices, and/or other peripheral devices, depending on the particular type of the compute node 800. In further examples, the compute node 800 may be embodied by a respective edge compute node (whether a client, gateway, or aggregation node) in an edge computing system or like forms of appliances, computers, subsystems, circuitry, or other components.

In a more detailed example, FIG. 8B illustrates a block diagram of an example of components that may be present in an edge computing node 850 for implementing the techniques (e.g., operations, processes, methods, and methodologies) described herein. This edge computing node 850 provides a closer view of the respective components of node 800 when implemented as or as part of a computing device (e.g., as a mobile device, a base station, server, gateway, etc.). The edge computing node 850 may include any combination of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 850, or as components otherwise incorporated within a chassis of a larger system.

The edge computing device 850 may include processing circuitry in the form of a processor 852, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 852 may be a part of a system on a chip (SoC) in which the processor 852 and other components are formed into a single integrated circuit, or a single package, such as the Edison^{™} or Galileo^{™} SoC boards from Intel Corporation, Santa Clara, California. As an example, the processor 852 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 852 and accompanying circuitry may be provided in a single socket form factor, multiple socket form factor, or a variety of other formats, including in limited hardware configurations or configurations that include fewer than all elements shown in FIG. 8B.

The processor 852 may communicate with a system memory 854 over an interconnect 856 (e.g., a bus). Any number of memory devices may be used to provide for a given amount of system memory. As examples, the memory 854 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 858 may also couple to the processor 852 via the interconnect 856. In an example, the storage 858 may be implemented via a solid-state disk drive (SSDD). Other devices that may be used for the storage 858 include flash memory cards, such as Secure Digital (SD) cards, microSD cards, extreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 858 may be on-die memory or registers associated with the processor 852. However, in some examples, the storage 858 may be implemented using a micro hard disk drive (HDD). Further, any number of new technologies may be used for the storage 858 in addition to, or instead of, the technologies described, such resistance change memories, phase change memories, holographic memories, or chemical memories, among others.

The components may communicate over the interconnect 856. The interconnect 856 may include any number of technologies, including industry standard architecture (ISA), extended ISA (EISA), peripheral component interconnect (PCI), peripheral component interconnect extended (PCIx), PCI express (PCIe), or any number of other technologies. The interconnect 856 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 856 may couple the processor 852 to a transceiver 866, for communications with the connected edge devices 862. The transceiver 866 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 862. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 866 (or multiple transceivers) may communicate using multiple standards or radios for communications at a different range. For example, the edge computing node 850 may communicate with close devices, e.g., within about 10 meters, using a local transceiver based on Bluetooth Low Energy (BLE), or another low power radio, to save power. More distant connected edge devices 862, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 866 (e.g., a radio transceiver) may be included to communicate with devices or services in a cloud (e.g., an edge cloud 895) via local or wide area network protocols. The wireless network transceiver 866 may be a low-power wide-area (LPWA) transceiver that follows the IEEE 802.15.4, or IEEE 802.15.4g standards, among others. The edge computing node 850 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 866, as described herein. For example, the transceiver 866 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 866 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 868 may be included to provide a wired communication to nodes of the edge cloud 895 or to other devices, such as the connected edge devices 862 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 868 may be included to enable connecting to a second network, for example, a first NIC 868 providing communications to the cloud over Ethernet, and a second NIC 868 providing communications to other devices over another type of network.

Given the variety of types of applicable communications from the device to another component or network, applicable communications circuitry used by the device may include or be embodied by any one or more of components 864, 866, 868, or 870. Accordingly, in various examples, applicable means for communicating (e.g., receiving, transmitting, etc.) may be embodied by such communications circuitry.

The edge computing node 850 may include or be coupled to acceleration circuitry 864, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 856 may couple the processor 852 to a sensor hub or external interface 870 that is used to connect additional devices or subsystems. The devices may include sensors 872, such as accelerometers, level sensors, flow sensors, optical light sensors, camera sensors, temperature sensors, global navigation system (e.g., GPS) sensors, pressure sensors, barometric pressure sensors, and the like. The hub or interface 870 further may be used to connect the edge computing node 850 to actuators 874, such as power switches, valve actuators, an audible sound generator, a visual warning device, and the like.

In some optional examples, various input/output (I/O) devices may be present within or connected to, the edge computing node 850. For example, a display or other output device 884 may be included to show information, such as sensor readings or actuator position. An input device 886, such as a touch screen or keypad may be included to accept input. An output device 884 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 850. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 876 may power the edge computing node 850, although, in examples in which the edge computing node 850 is mounted in a fixed location, it may have a power supply coupled to an electrical grid, or the battery may be used as a backup or for temporary capabilities. The battery 876 may be a lithium ion battery, or a metal-air battery, such as a zinc-air battery, an aluminum-air battery, a lithium-air battery, and the like.

A battery monitor/charger 878 may be included in the edge computing node 850 to track the state of charge (SoCh) of the battery 876, if included. The battery monitor/charger 878 may be used to monitor other parameters of the battery 876 to provide failure predictions, such as the state of health (SoH) and the state of function (SoF) of the battery 876. The battery monitor/charger 878 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 878 may communicate the information on the battery 876 to the processor 852 over the interconnect 856. The battery monitor/charger 878 may also include an analog-to-digital (ADC) converter that enables the processor 852 to directly monitor the voltage of the battery 876 or the current flow from the battery 876. The battery parameters may be used to determine actions that the edge computing node 850 may perform, such as transmission frequency, mesh network operation, sensing frequency, and the like.

A power block 880, or other power supply coupled to a grid, may be coupled with the battery monitor/charger 878 to charge the battery 876. In some examples, the power block 880 may be replaced with a wireless power receiver to obtain the power wirelessly, for example, through a loop antenna in the edge computing node 850. A wireless battery charging circuit, such as an LTC4020 chip from Linear Technologies of Milpitas, California, among others, may be included in the battery monitor/charger 878. The specific charging circuits may be selected based on the size of the battery 876, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 858 may include instructions 882 in the form of software, firmware, or hardware commands to implement the techniques described herein. Although such instructions 882 are shown as code blocks included in the memory 854 and the storage 858, it may be understood that any of the code blocks may be replaced with hardwired circuits, for example, built into an application specific integrated circuit (ASIC).

In an example, the instructions 882 provided via the memory 854, the storage 858, or the processor 852 may be embodied as a non-transitory, machine-readable medium 860 including code to direct the processor 852 to perform electronic operations in the edge computing node 850. The processor 852 may access the non-transitory, machine-readable medium 860 over the interconnect 856. For instance, the non-transitory, machine-readable medium 860 may be embodied by devices described for the storage 858 or may include specific storage units such as storage devices and/or storage disks that include optical disks (e.g., digital versatile disk (DVD), compact disk (CD), CD-ROM, Blu-ray disk), flash drives, floppy disks, hard drives (e.g., SSDs), or any number of other hardware devices in which information is stored for any duration (e.g., for extended time periods, permanently, for brief instances, for temporarily buffering, and/or caching). The non-transitory, machine-readable medium 860 may include instructions to direct the processor 852 to perform a specific sequence or flow of actions, for example, as described with respect to the flowchart(s) and block diagram(s) of operations and functionality depicted above. As used herein, the terms "machine-readable medium" and "computer-readable medium" are interchangeable. As used herein, the term "non-transitory computer-readable medium" is expressly defined to include any type of computer readable storage device and/or storage disk and to exclude propagating signals and to exclude transmission media.

Also in a specific example, the instructions 882 on the processor 852 (separately, or in combination with the instructions 882 of the machine readable medium 860) may configure execution or operation of a trusted execution environment (TEE) 890. In an example, the TEE 890 operates as a protected area accessible to the processor 852 for secure execution of instructions and secure access to data. Various implementations of the TEE 890, and an accompanying secure area in the processor 852 or the memory 854 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 850 through the TEE 890 and the processor 852.

While the illustrated examples of FIG. 8A and FIG. 8B include example components for a compute node and a computing device, respectively, examples disclosed herein are not limited thereto. As used herein, a "computer" may include some or all of the example components of FIGS. 8A and/or 8B in different types of computing environments. Example computing environments include edge computing devices (e.g., edge computers) in a distributed networking arrangement such that particular ones of participating edge computing devices are heterogenous or homogeneous devices. As used herein, a "computer" may include a personal computer, a server, user equipment, an accelerator, etc., including any combinations thereof. In some examples, distributed networking and/or distributed computing includes any number of such edge computing devices as illustrated in FIGS. 8A and/or 8B, each of which may include different sub-components, different memory capacities, I/O capabilities, etc. For example, because some implementations of distributed networking and/or distributed computing are associated with particular desired functionality, examples disclosed herein include different combinations of components illustrated in FIGS. 8A and/or 8B to satisfy functional objectives of distributed computing tasks. In some examples, the term "compute node" or "computer" only includes the example processor 804, memory 806 and I/O subsystem 808 of FIG. 8A. In some examples, one or more objective functions of a distributed computing task(s) rely on one or more alternate devices/structure located in different parts of an edge networking environment, such as devices to accommodate data storage (e.g., the example data storage 810), input/output capabilities (e.g., the example peripheral device(s) 814), and/or network communication capabilities (e.g., the example NIC 820).

In some examples, computers operating in a distributed computing and/or distributed networking environment (e.g., an edge network) are structured to accommodate particular objective functionality in a manner that reduces computational waste. For instance, because a computer includes a subset of the components disclosed in FIGS. 8A and 8B, such computers satisfy execution of distributed computing objective functions without including computing structure that would otherwise be unused and/or underutilized. As such, the term "computer" as used herein includes any combination of structure of FIGS. 8A and/or 8B that is capable of satisfying and/or otherwise executing objective functions of distributed computing tasks. In some examples, computers are structured in a manner commensurate to corresponding distributed computing objective functions in a manner that downscales or upscales in connection with dynamic demand. In some examples, different computers are invoked and/or otherwise instantiated in view of their ability to process one or more tasks of the distributed computing request(s), such that any computer capable of satisfying the tasks proceed with such computing activity.

In the illustrated examples of FIGS. 8A and 8B, computing devices include operating systems. As used herein, an "operating system" is software to control example computing devices, such as the example edge compute node 800 of FIG. 8A and/or the example edge compute node 850 of FIG. 8B. Example operating systems include, but are not limited to consumer-based operating systems (e.g., Microsoft^{®} Windows^{®} 10, Google^{®} Android^{®} OS, Apple^{®} Mac^{®} OS, etc.). Example operating systems also include, but are not limited to industry-focused operating systems, such as real-time operating systems, hypervisors, etc. An example operating system on a first edge compute node may be the same or different than an example operating system on a second edge compute node. In some examples, the operating system invokes alternate software to facilitate one or more functions and/or operations that are not native to the operating system, such as particular communication protocols and/or interpreters. In some examples, the operating system instantiates various functionalities that are not native to the operating system. In some examples, operating systems include varying degrees of complexity and/or capabilities. For instance, a first operating system corresponding to a first edge compute node includes a real-time operating system having particular performance expectations of responsivity to dynamic input conditions, and a second operating system corresponding to a second edge compute node includes graphical user interface capabilities to facilitate end-user I/O.

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

A non-transitory machine-readable medium (e.g., a computer-readable medium) may include any medium (e.g., storage device, storage disk, etc.) capable of storing, encoding or carrying instructions for execution by a machine and that cause the machine to perform any one or more of the methodologies of the present disclosure or that is capable of storing, encoding or carrying data structures utilized by or associated with such instructions. A "non-transitory machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks (e.g., SSDs); magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. As used herein, the term non-transitory computer readable medium is expressly defined to include any type of computer readable storage device and/or storage disk and to exclude propagating signals and to exclude transmission media. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

While the concepts of the present disclosure are susceptible to various modifications and alternative forms, specific embodiments thereof have been shown by way of example in the drawings and are described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

### Examples

Illustrative examples of the technologies described throughout this disclosure are provided below. Embodiments of these technologies may include any one or more, and any combination of, the examples described below. In some embodiments, at least one of the systems or components set forth in one or more of the preceding figures may be configured to perform one or more operations, techniques, processes, and/or methods as set forth in the following examples.

Example 1 includes a system, comprising: interface circuitry; and processing circuitry to: receive, via the interface circuitry, environment data associated with a plurality of compute devices in a distributed computing infrastructure, wherein the compute devices are in a plurality of locations, and wherein the environment data is indicative of an operating environment of the respective compute devices and a physical environment of the respective locations; predict, based on the environment data, future operating conditions of the compute devices; and orchestrate, via the interface circuitry, execution of a plurality of workloads on the distributed computing infrastructure based on the predicted future operating conditions of the compute devices, wherein the workloads are to be executed on at least some of the compute devices.

Example 2 includes the system of Example 1, wherein the environment data indicates one or more of resource utilization, hardware temperature, vibration, airflow, power supply stability, ambient temperature, humidity, wind, or precipitation.

Example 3 includes the system of any of Examples 1-2, wherein the predicted future operating conditions include one or more of predicted hardware temperature or predicted resource utilization.

Example 4 includes the system of any of Examples 1-3, wherein the processing circuitry to orchestrate, via the interface circuitry, execution of the plurality of workloads on the distributed computing infrastructure based on the predicted future operating conditions of the compute devices is further to: preemptively migrate one or more of the workloads between at least some of the compute devices based on the predicted future operating conditions.

Example 5 includes the system of Example 4, wherein one or more of the workloads are preemptively migrated temporarily until operating conditions stabilize for one or more of the compute devices.

Example 6 includes the system of any of Examples 4-5, wherein one or more of the workloads are preemptively migrated based on the predicted future operating conditions and one or more service level agreements.

Example 7 includes the system of any of Examples 1-6, wherein the future operating conditions are predicted based on a machine learning model trained to predict the future operating conditions based on the environment data.

Example 8 includes the system of any of Examples 1-7, wherein the distributed computing infrastructure comprises an edge computing infrastructure.

Example 9 includes the system of any of Examples 1-8, further comprising the plurality of compute devices, wherein at least some of the compute devices are to execute the workloads.

Example 10 includes at least one non-transitory machine-readable storage medium having instructions stored thereon, wherein the instructions, when executed on processing circuitry, cause the processing circuitry to: receive, via interface circuitry, environment data associated with a plurality of compute devices in a distributed computing infrastructure, wherein the compute devices are in a plurality of locations, and wherein the environment data is indicative of a physical environment of the respective locations; predict, based on the environment data, future operating conditions of the compute devices; and orchestrate, via the interface circuitry, execution of a plurality of workloads on the distributed computing infrastructure based on the predicted future operating conditions of the compute devices, wherein the workloads are to be executed on at least some of the compute devices.

Example 11 includes the storage medium of Example 10, wherein the environment data indicates one or more of ambient temperature, humidity, wind, or precipitation.

Example 12 includes the storage medium of any of Examples 10-11, wherein the environment data is further indicative of an operating environment of the respective compute devices.

Example 13 includes the storage medium of Example 12, wherein the environment data indicates one or more of resource utilization, hardware temperature, vibration, airflow, or power supply stability.

Example 14 includes the storage medium of any of Examples 10-13, wherein the predicted future operating conditions include one or more of predicted hardware temperature or predicted resource utilization.

Example 15 includes the storage medium of any of Examples 10-14, wherein the instructions that cause the processing circuitry to orchestrate, via the interface circuitry, execution of the plurality of workloads on the distributed computing infrastructure based on the predicted future operating conditions of the compute devices further cause the processing circuitry to: preemptively migrate one or more of the workloads between at least some of the compute devices based on the predicted future operating conditions.

Example 16 includes the storage medium of Example 15, wherein one or more of the workloads are preemptively migrated temporarily until operating conditions stabilize for one or more of the compute devices.

Example 17 includes the storage medium of any of Examples 15-16, wherein one or more of the workloads are preemptively migrated based on the predicted future operating conditions and one or more service level agreements.

Example 18 includes the storage medium of any of Examples 10-17, wherein the future operating conditions are predicted based on a machine learning model trained to predict the future operating conditions based on the environment data.

Example 19 includes a method, comprising: receiving, via interface circuitry, environment data associated with a plurality of compute devices in a distributed computing infrastructure, wherein the compute devices are in a plurality of locations, and wherein the environment data indicates operating conditions of the respective compute devices and environment conditions of the respective locations; predicting, based on the environment data, future operating conditions of the compute devices; and orchestrating, via the interface circuitry, execution of a plurality of workloads on the distributed computing infrastructure based on the predicted future operating conditions of the compute devices, wherein the workloads are to be executed on at least some of the compute devices.

Example 20 includes the method of Example 19, wherein: the operating conditions include one or more of resource utilization, hardware temperature, vibration, airflow, or power supply stability; and the environment conditions include one or more of ambient temperature, humidity, wind, or precipitation.

Example 21 includes the method of any of Examples 19-20, wherein the predicted future operating conditions include one or more of predicted hardware temperature or predicted resource utilization.

Example 22 includes the method of any of Examples 19-21, wherein orchestrating, via the interface circuitry, execution of the plurality of workloads on the distributed computing infrastructure based on the predicted future operating conditions of the compute devices comprises: preemptively migrating one or more of the workloads between at least some of the compute devices based on the predicted future operating conditions.

Example 23 includes the method of Example 22, wherein one or more of the workloads are preemptively migrated temporarily until operating conditions stabilize for one or more of the compute devices.

Example 24 includes the method of any of Examples 22-23, wherein one or more of the workloads are preemptively migrated based on the predicted future operating conditions and one or more service level agreements.

Example 25 includes the method of any of Examples 19-24, wherein the future operating conditions are predicted based on a machine learning model trained to predict the future operating conditions based on the environment data.

## Claims

1. A method, comprising:
receiving, via interface circuitry, environment data associated with a plurality of compute devices in a distributed computing infrastructure, wherein the compute devices are in a plurality of locations, and wherein the environment data is indicative of a physical environment of the respective locations;
predicting, based on the environment data, future operating conditions of the compute devices; and
orchestrating, via the interface circuitry, execution of a plurality of workloads on the distributed computing infrastructure based on the predicted future operating conditions of the compute devices, wherein the workloads are to be executed on at least some of the compute devices.

2. The method of Claim 1, wherein the environment data indicates one or more of ambient temperature, humidity, wind, or precipitation.

3. The method of any of Claims 1-2, wherein the environment data is further indicative of an operating environment of the respective compute devices.

4. The method of Claim 3, wherein the environment data indicates one or more of resource utilization, hardware temperature, vibration, airflow, or power supply stability.

5. The method of any of Claims 1-4, wherein the predicted future operating conditions include one or more of predicted hardware temperature or predicted resource utilization.

6. The method of any of Claims 1-5, wherein orchestrating, via the interface circuitry, execution of the plurality of workloads on the distributed computing infrastructure based on the predicted future operating conditions of the compute devices comprises:
preemptively migrating one or more of the workloads between at least some of the compute devices based on the predicted future operating conditions.

7. The method of Claim 6, wherein one or more of the workloads are preemptively migrated temporarily until operating conditions stabilize for one or more of the compute devices.

8. The method of any of Claims 6-7, wherein one or more of the workloads are preemptively migrated based on the predicted future operating conditions and one or more service level agreements.

9. The method of any of Claims 1-8, wherein the future operating conditions are predicted based on a machine learning model trained to predict the future operating conditions based on the environment data.

10. The method of any of Claims 1-9, wherein the distributed computing infrastructure comprises an edge computing infrastructure.

11. An apparatus comprising means to perform a method as claimed in any preceding claim.

12. At least one machine accessible storage medium having instructions stored thereon, the instructions when executed on a machine, cause the machine to perform a method or realize an apparatus as claimed in any preceding claim.
